Europäisches Patentamt

European Patent Office

Office européen des brevets

(11) Publication number: **0 384 741**
**A2**

## (12) EUROPEAN PATENT APPLICATION

(21) Application number: 90301883.6

(22) Date of filing: 21.02.90

(51) Int. Cl.5: **F16J 15/08**

(30) Priority: 21.02.89 US 313024

(43) Date of publication of application:
**29.08.90 Bulletin 90/35**

(84) Designated Contracting States:
**AT BE DE DK ES FR GB IT NL SE**

(71) Applicant: **A.W. CHESTERTON COMPANY**
**225 Fallon Road, Middlesex Industrial Park**
**Stoneham, Massachusetts 02180(US)**

(72) Inventor: **van Vleet, Frank R.**
**Ten Paulornette Circle**
**Andover, Massachusetts 01810(US)**

(74) Representative: **Deans, Michael John Percy et**
**al**
**Lloyd Wise, Tregear & CO. Norman House**
**105-109 Strand**
**London WC2R OAE(GB)**

(54) **Seal assembly and method.**

(57) A seal assembly for sealing against a cylindrical surface to be sealed includes an annular, non-elastomer, deformable sealing ring having a pair of axially facing surfaces, and having a cylindrical sealing surface adapted to sealingly engage the cylindrical surface to be sealed. Also provided is a pair of annular clamp members defining a pair of axially facing mating clamping walls, one on each side of the sealing ring, and means for clamping the sealing ring between the clamping walls. The cylindrical sealing surface of the sealing ring extends toward the cylindrical surface to be sealed. One of the pairs of axially facing surfaces of the sealing ring and axially facing walls of the clamp members undulates axially, and the other pair is generally planar. Upon clamping the sealing ring between the clamp members the diameter of the cylindrical sealing surface thereof is changed to cause sealing engagement thereof against the cylindrical surface to be sealed.

FIG.1

## SEAL ASSEMBLY AND METHOD

This invention relates to seal assemblies and to methods of sealing.

Sealing rings, for example, elastomeric O-rings, are commonly used to seal a cylindrical surface, and thereby prevent a liquid passing along that surface. At high temperatures elastomeric seals are no longer suitable. Metal seals have also been employed and are suitable for high temperature applications. Such seals typically are V-shaped, having legs that spread upon compression of the seal to change their diameter to engage cylindrical sealing surfaces. A seal has also been suggested in U.S. Patent 4,372,565, having a deformable ridge on an axially facing side such that on compression of the ridge, the seal will tend to deform and change the inner and outer diameters. Such deformation of metal seals creates internal tensile and/or compressive stresses, known as hoop stresses, circumferentially in the sealing ring independently of the stresses resulting from sealing pressures against the surfaces to be sealed.

In a first aspect, the invention features a seal assembly for sealing against a cylindrical surface to be sealed. The assembly includes an annular, non-elastomer, deformable sealing ring having a pair of axially facing surfaces, and having a cylindrical sealing surface with diameter initially different than and adapted to space the cylindrical sealing surface from the cylindrical surface to be sealed and adapted to sealingly engage the cylindrical surface to be sealed. Also provided is a pair of annular clamp members defining a pair of axially facing mating clamping wall surfaces, one on each side of the sealing ring, and means for clamping the sealing ring between the clamping walls. The cylindrical sealing surface of the sealing ring extends toward the cylindrical surface to be sealed. One of the pairs of axially facing surfaces of the sealing ring and the axially facing wall surfaces of the clamp members is non-planar, undulating axially, the surfaces of the one pair having matching contours formed by equal numbers of axial excursions of each such surface on each side of its respective median transverse plane. The other pair of axially facing surfaces is generally planar. Upon clamping the sealing ring between the clamp members the diameter of the cylindrical sealing surface is changed by the deformation of the ring to the contour of the clamp members to cause sealing engagement thereof against the cylindrical surface to be sealed.

In preferred embodiments, the cylindrical sealing surface of the sealing ring extends beyond at least one of the clamp members toward the cylindrical surface to be sealed; the sealing ring is formed of ductile, heat and corrosion resistant metal; and the sealing ring has either a generally trapezoidal or a rectangular cross-section. In one embodiment the sealing ring comprises the pair of undulating axially facing surfaces, and in another embodiment the clamp members comprise the pair of undulating axially facing surfaces. The sealing ring and clamp members are preferably arranged for simultaneous contact at juxtaposed positions equally spaced from their axis and extending continuously thereabout.

In a related aspect, the invention features a method for forming a liquid-tight seal about a cylindrical surface. The method includes the steps of: providing the annular, non-elastomer, deformable sealing ring, and the pair of annular clamp members described above; placing the sealing ring between the clamping walls and adjacent the cylindrical surface to be sealed; and causing the clamping walls to apply pressure axially to clamp the sealing ring, deforming the ring to the contour of the axially facing wall surfaces of the clamp member to change the diameter of the sealing ring, thereby creating a tight seal with the cylindrical surface to be sealed. In particular embodiments, the clamping pressure also seals at least one of the clamping walls against the adjacent axially facing surface of the sealing ring.

In general, the seal is formed of a pair of matched clamping ring members having a matched face profile which cause the deformation of a ductile sealing ring to either decrease the inner diameter or increase the outer diameter of the ring, and thereby seal the ring against a cylindrical surface. Either the sealing ring or the pair of matched clamping rings have an undulating surface such that, when the clamping rings are used to deform the sealing ring, excess or reduced material is provided to allow the diameter of the sealing ring to change. Thus, the sealing surface of the sealing ring is caused to deform to the diameter of the surface to be sealed.,

This assembly provides a mechanical seal especially suitable for use at high temperature, e.g., greater than 600° C, and in the presence of caustic chemicals which cause degradation of elastomeric seals. Advantageously, only bending stresses result from the deformation of the sealing ring; circumferential tensile and for compressive stresses, "hoop stresses", are avoided in the change of ring diameter until the ring abuts the surface to be sealed. This aids in assuring positive sealing, limits the force necessary to achieve adequate sealing, and avoids forces, especially circumferential compression stresses, which might tend to deform the seal away from surfaces to be sealed. Because such stresses are avoided, a relatively thick axial dimension can be employed to provide a large sealing surface to further aid in sealing.

Other features and advantages of the invention will be apparent from the following description of the preferred embodiments thereof.

The drawings will first briefly be described. In the drawings:-

Fig. 1 is a somewhat diagrammatic exploded isometric view of an embodiment of seal assembly in accordance with the invention; and Figs. 1a and 1b are front and side views respectively of the sealing ring of this assembly;

Fig. 2 is a fragmentary somewhat diagrammatic sectional view through a seal assembly positioned under a cylindrical surface prior to clamping;

Figs. 3 is a fragmentary somewhat diagrammatic sectional view of the assembly shown in Fig. 2 after clamping;

Fig. 3a is a view similar to that of Fig. 3 illustrating an alternate embodiment of the sealing ring in the assembly ;

Fig. 4 is an alternative embodiment of a seal assembly shown in a somewhat diagrammatic exploded isometric view; and Figs. 4a and 4b are front and side views respectively of one clamp ring member of this assembly;

Fig. 5 is a fragmentary somewhat diagrammatic sectional view through an alternate seal assembly positioned about a cylindrical shaft surface prior to clamping;

Fig. 6 is a fragmentary somewhat diagrammatic sectional view of the alternate sealing assembly shown in Fig. 5 after clamping; and

Fig. 6a is a view similar to that of Fig. 6 illustrating an alternate embodiment of the sealing ring in the assembly.

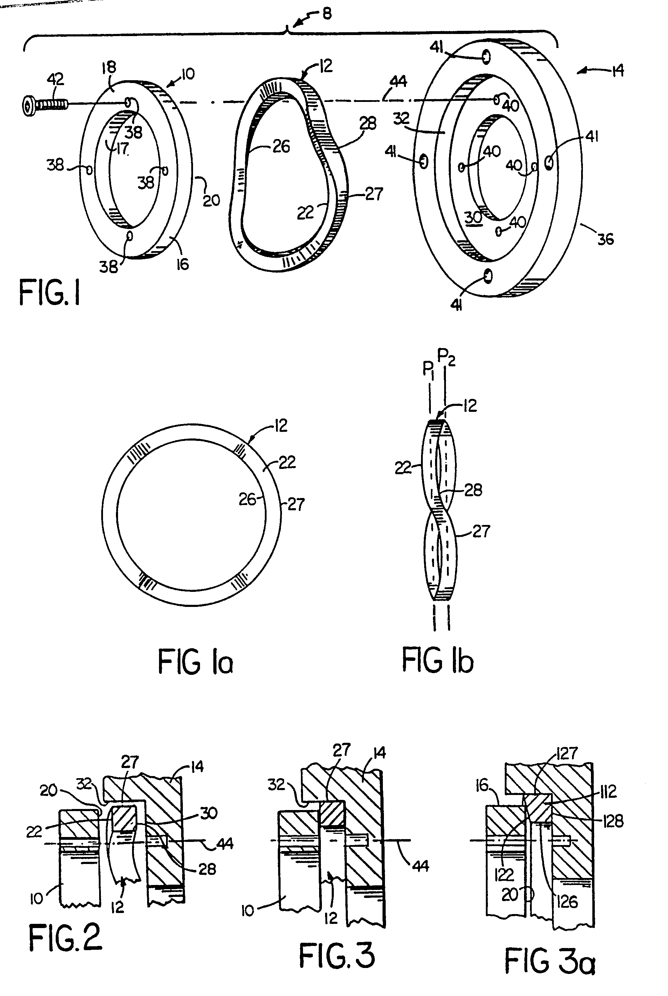

Referring to Figs. 1, 1a and 1b, a sealing assembly 8 is constructed from a pair of clamp ring members 10, 14 and a sealing ring 12. Clamp member 10 has an outer cylindrical wall 16, an inner cylindrical wall 17, and two parallel axially facing walls 18, 20 extending radially from the inner cylindrical wall to the outer cylindrical wall. Similarly, clamp member 14 has two parallel axially facing wall surfaces 30, 36, and an inner cylindrical wall surface 32 to be sealed. Parallel axially facing walls 20, 30 are generally planar and form a pair of mating clamping wall surfaces. The clamp members are formed of, e.g., AISI 316 stainless steel.

Sealing ring 12 has an inner cylindrical wall 26, an outer cylindrical sealing surface, wall 27, and two axially facing undulating surfaces, walls 22, 28. Walls 22, 28 of sealing ring 12 have matching parallel undulating contours formed by an equal number of axial excursions of each wall on each side of its respective median transverse plane $P_1$

and $P_2$ in Fig. 1b. In small sizes, e.g., 2 inch diameter, two excursions on each side of the planes, resulting in four lobes, have been found to be adequate, as illustrated. In larger diameters additional excursions are believed to be preferable.. The sealing ring has a generally rectangular, square, 0.060 x 0.060 inch (0.1524 x 0.1524 cm) cross-section, in the embodiment illustrated in Figs. 1-3, and is formed of a ductile metal, e.g., AISI 316 stainless steel which may be silver plated to aid sealing. The sealing ring has an outer diameter greater than and extends beyond the clamp member 10 toward the cylindrical surface to be sealed but has an initial diameter less than that of the cylindrical wall surface 32 to be sealed and is initially spaced therefrom to facilitate assembly, as shown in Fig. 2. In making the ring, an initially flat, planar ring is provided with an outer diameter slightly larger, e.g., on the order of 0.008 inch (0.02032 cm) larger than the cylindrical surface to be sealed. The ring is then deformed to its undulating configuration. Thus, when the ring is compressed back to a planar form, the outer diameter provides an interference fit against the surface to be sealed.

Also provided within clamp members 10, 14 are apertures 38, 40, aperture 38 being drilled and aperture 40 being tapped to allow a screw 42 to be inserted within the apertures to cause the clamp members to axially approach each other along an axis 44. As the clamp members approach each other, axially facing mating clamping walls 20 and 30 simultaneously contact axially facing walls 22 and 28 respectively of sealing ring 12 at juxtaposed positions equally radially spaced from the axis of the assembly. The contact positions extend in substantially continuous lines of contact about the axially facing surfaces of the sealing ring and clamp members. Clamping of the clamp members about the sealing ring causes deformation of the sealing ring to the planar contour of the clamping walls 20, 30 and thus increases the diameter of the ring to produce a seal between walls 27 and 32, as described below.

In an alternate embodiment illustrated in Fig. 3a, sealing ring 112 has inner and outer cylindrical walls 126, 127 and axially facing walls 122, 128, which undulate in the same manner as ring 12, above described. Wall 122, however, facing clamp member 10, is angled, e.g., at about 20°, from outer wall 127 inwardly toward wall 128. Wall 128, however, is planar and is perpendicular to wall 127; walls 127 and 128 each being 0.060 inch (0.1524 cm), in the illustrated embodiment. Thus, clamp member 10 contacts trapezoidal ring 112 on a circular line of contact at the corner defined by walls 16, 20 wedging ring 112 tightly into position and forming a seal along the line of contact as well as between outer wall 127 of ring and wall 32.

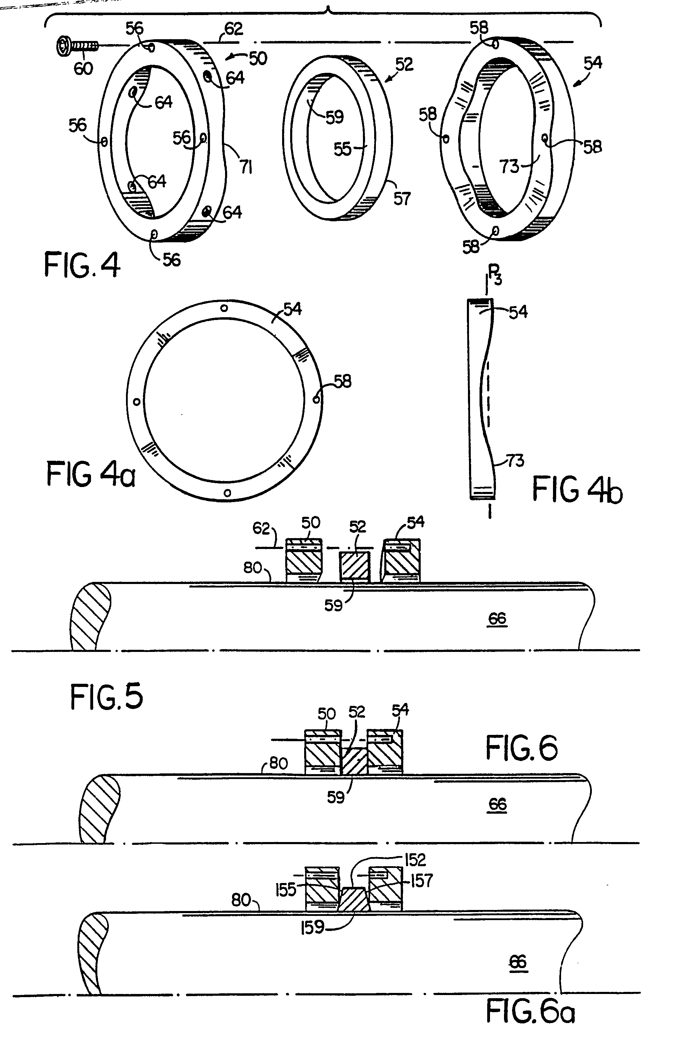

Referring to Figs. 4, 4a and 4b in another embodiment, clamp members 50, 54 are formed of, e.g., AISI 316 stainless steel, and have matching, parallel undulating axially facing walls 71, 73, the contours of each being formed by an equal number, two in smaller sizes, of axial excursions thereof On each side of its respective median transverse plane, e.g., $P_3$ in Fig. 4b. Rectangular, square sealing ring 52 is formed with two generally planar axially facing surfaces, walls 55, 57, and an inner sealing surface, wall 59, extending inwardly beyond the clamp members toward the surface to be sealed 80, formed of, e.g., AISI 316 stainless steel. Ring 52 has an inner diameter smaller than and extends beyond the clamp members 50, 54 toward the cylindrical surface to be sealed, but has an initial inner diameter greater than the diameter of the surface to be sealed to facilitate assembly as shown in Fig. 5. Drilled and tapped apertures 56, 58, respectively, are provided to allow the clamp members to be caused to approach each other along an axis 62, by use of screws 60. Clamping of the undulating clamp members about the planar sealing ring at juxtaposed positions equally radially spaced from the axis of the assembly along substantially continuous lines of contact causes deformation of the sealing ring and thus reduces the diameter of the ring to produce an interference fit and a seal against the cylindrical surface of a shaft 66, as described below. The reduction of diameter is designed to provide an inner diameter of the ring slightly smaller, e.g. 0.008 inch (0.02032 cm), than the diameter of the surface to be sealed. Thus the interference fit results upon the diameter reduction. Tapped radial apertures 64 are provided in clamp member 50 to permit it to be secured to the shaft by set screws, not shown.

In an alternate preferred embodiment, illustrated in Fig. 6a, sealing ring 152 has inner cylindrical wall 159 and axially facing walls 155, 157. Walls 155, 157 are each angled inwardly, at about 20°, to give ring 152 a trapezoidal configuration in which inner wall 159 is the base of the trapezoid. Thus, clamp members 50, 54 contact ring 152 on circular lines of contact, wedging sealing ring 152 tightly against the surface 80 to be sealed and forming seals along the lines of contact as well as between inner wall 159 and surface 80. As in the embodiments previously explained, the axial width and height of the seal cross section are each 0.060 inch (0.1524 cm).

Referring to Figs. 2, 3 and 3a, in order to seal an inner cylindrical surface 32, clamp member 10 is slid axially within cylindrical surface 32 with sealing ring 12 or 112 positioned between clamp members 10 and 14. When the sealing assembly is properly located, screws 42 are threaded through apertures 38, 40 to cause the clamp members to be brought axially together. As the screws are tightened, more clamping pressure is exerted, and sealing ring 12 or 112 is caused to deform from its undulating form to a flat form. This deformation is turn causes the outer diameter to simultaneously increase, thus causing outer cylindrical wall 27 or 127 to contact cylindrical surface 32 in an interference fit, forming a tight seal. When sealing ring 12 assumes a flat form, seals are also formed between axially facing walls 22, 28 or 122, 128 and clamping walls 20, 30 respectively.

Referring to Figs. 5, 6 and 6(a), in order to seal an outer cylindrical surface 80, clamp members 50, 54 and sealing ring 52 or 152 are used. The clamp members are clamped together, as described above, to cause deformation of walls 55, 57 or 155, 157 to the undulating contour of the walls 71, 73 of the clamp members 50, 54, thereby causing the inner diameter of the sealing ring to decrease and create an interference fit and a seal with outer cylindrical surface 80 and inner sealing wall 59. When walls 55, 57 or 155, 157 are completely deformed they form a seal with undulating walls 71, 73 respectively. Seals are also formed between clamping walls 71, 73 and walls 55, 57, or 155, 157, respectively, of the sealing ring 52 or 152.

Advantageously, in each embodiment, even though the yield point of the metal sealing ring 12, 112, 52, 152 may be exceeded as the ring is deformed, gt has been found that upon release of the clamping force the ring tends to return partially to its original configuration changing diameter again and permitting ready removal of the sealing ring .

Obviously the seal assemblies shown and described would comprise components of a larger seal assembly. Thus, for example, clamp members 10 and 54 of the two embodiments, respectively, could be connected to other components of mechanical seal assemblies to provide a seal between a rotating shaft and a stationary stuffing box and seal gland. In such an arrangement the seal rings could substitute for the O-rings normally employed therein for static sealing to provide sealing against cylindrical surfaces to be sealed and against at least the clamp member to which other mechanical seal components are connected.

## Claims

1. A seal assembly for sealing against a cylindrical surface to be sealed comprising:
a generally annular, non-elastomer, deformable sealing ring having a pair of axially facing surfaces and having a cylindrical sealing surface with a diameter initially different to and adapted to space said cylindrical sealing surface from said cylindrical surface to be sealed, said sealing ring being adapted upon change of said diameter to sealingly engage said cylindrical surface to be sealed; and
a pair of generally annular clamp members defining a pair of axially facing mating clamping wall surfaces, one on each side of said sealing ring, and means for clamping said sealing ring between said clamping wall surfaces with said cylindrical sealing surface of said sealing ring extending toward said cylindrical surface to be sealed; said assembly being characterised in that:
one of the pairs of axially facing surfaces of said sealing ring and said axially facing wall surfaces of said clamp members is non-planar and undulating axially, said surfaces of said one pair having matching contours being formed by equal numbers of axial excursions of each such surface on each side of its respective median transverse plane, and the other pair of said axially facing surfaces is generally planar;
whereby upon clamping said sealing ring between said clamp members the diameter of said cylindrical sealing surface thereof is changed by the deformation of said pair of axially facing surfaces of said ring to the contour of said pair of axially facing wall surfaces of said clamp members to cause sealing engagement thereof against said cylindrical surface to be sealed.

2. The seal assembly of claim 1, further characterized in that said sealing ring comprises said one pair of nonplanar undulating axially facing surfaces and the outer diameter thereof comprises said cylindrical sealing surface.

3. The seal assembly of claim 1, further characterized in that said annular clamp members comprise said one pair of nonplanar undulating axially facing mating surfaces and the inner diameter of said sealing ring comprises said cylindrical sealing surface.

4. The seal assembly of either of claims 2 or 3 further characterized in that said sealing ring is of trapezoidal cross-section with the base of said trapezoid comprising said cylindrical sealing surface thereof.

5. The seal assembly of any of the preceding claims, further characterized in that said cylindrical sealing surface of said sealing ring extends beyond at least one of said clamp members toward said sealing surface to be sealed.

6. The seal assembly of any of the preceding claims, further characterized in that said sealing ring is formed of ductile, heat and corrosion resistant metal.

7. The seal assembly of any of the preceding claims in which said sealing ring is of generally rectanqular cross-section.

8. The seal assembly of any of the preceding claims further characterized in that said axially facing surfaces of said sealing ring and of said clamp members are adapted for simultaneous contact at juxtaposed positions equally radially spaced from the axis of said seal assembly and extending in continuous lines of contact about said axially facing surfaces.

9. A method for forming a seal about a cylindrical surface to be sealed, comprising the steps of:
providing adjacent said cylindrical surface to be sealed a generally annular, non-elastomer, deformable sealing ring having a pair of axially facing surfaces and having a cylindrical sealing surface diameter spacing said cylindrical sealing surface from said cylindrical surface to be sealed and adapted upon change of said diameter to seal said cylindrical surface to be sealed upon engagement therewith;
providing a pair of generally annular clamp members defining a pair of axially facing mating clamping wall surfaces, one on each side of said sealing ring, and means for clamping said sealing ring between said clamping walls, said cylindrical sealing surface of said sealing ring extending toward said cylindrical surface to be sealed;
placing said sealing ring between said clamping wall surfaces adjacent the cylindrical surface to be sealed; and
causing said clamping wall surfaces to apply pressure axially to clamp said sealing ring;
characterised in that
one of the pairs of axially facing surfaces of said sealing ring and said axially facing wall surfaces of said clamp members is non-planar undulating axially, said surfaces of said one pair having matching contours formed by equal numbers of excursions of each such surface on each side of its respective median transverse plane, and the other pair of said axially facing surfaces being generally planar;
and in that said clamping step is effective to deform said pair of axially facing surfaces of said ring to the contour of said axially facing wall surfaces of said clamp members and to change the diameter of said sealing ring, thereby engaging and creating a seal between said cylindrical sealing surface and the cylindrical surface to be sealed.

10. A method according to Claim 9, further characterised in that said sealing ring and clamp members are as defined in any of Claims 2 to 7.

11. A method according to Claims 9 or 10, further characterised in that said clamping wall surfaces are clamped sufficiently to provide a seal between at least one of the axially facing clamping wall surfaces and the axially facing surface of said sealing ring thereadjacent.

12. A method according to Claims 9, 10 or 11, further characterised by simultaneously contacting said axially facing surfaces of said sealing ring and of said clamp members at juxtaposed positions equally radially spaced from the axis of said seal assembly extending in continuous lines of contact about said axially facing surfaces and then applying said pressure to clamp and deform said sealing ring to the contour of said clamp member walls.

8

42  18  10  41  14

38  17  44  32  40  41

38  28  40

26  38  40  41

38  20  22  27  30  40

38  16  36

**FIG. 1**

12

22

26  27

**FIG 1a**

P₁  P₂

12

22  28

27

**FIG 1b**

27  14

20  32  30

22  44

44  28

10  12

**FIG. 2**

27  14

32  44

10  12

**FIG. 3**

127

16  112

128

122  20  126

**FIG 3a**

FIG.4

FIG 4a

FIG 4b

FIG.5

FIG.6

FIG.6a